# EUROPEAN PATENT SPECIFICATION

(11) **EP 2 384 395 B1**
(45) Date of publication and mention of the grant of the patent: **19.06.2013**
(21) Application number: 08875808.1
(22) Date of filing: 30.12.2008
(51) Int. Cl.: F01N 3/022, F01N 3/033, F01N 5/02, F01N 13/14, F02C 6/00, H01L 35/00, F01K 23/06

(54) **ENERGY RECOVERY SYSTEM FOR AN INTERNAL COMBUSTION ENGINE**
ENERGIERÜCKGEWINNUNGSSYSTEM FÜR EINEN VERBRENNUNGSMOTOR
SYSTÈME DE RÉCUPÉRATION D'ÉNERGIE POUR MOTEUR À COMBUSTION INTERNE

(43) Date of publication of application: 09.11.2011
(73) Proprietor: Renault Trucks, 69802 Saint Priest (FR)
(72) Inventor: LEJEUNE, Marc, F-69002 LYON (FR); IOJOIU, Eduard Emil, F-38000 Grenoble (FR)
(74) Representative: Putet, Gilles
(86) International application number: PCT/IB2008/003803
(87) International publication number: WO 2010/076588

(56) References cited:
- EP-A1- 1 249 585
- WO-A1-2004/099577
- WO-A1-2005/103453
- WO-A1-2009/056253
- DE-A1- 19 960 762
- FR-A1- 2 884 556
- US-A- 5 477 676

## Description

### Field of the Invention

The present invention relates to an energy recovery system for an internal combustion engine, for example for an industrial vehicle. The invention also relates to an internal combustion engine comprising such an energy recovery system.

### Technological background

For many years, attempts have been made to improve vehicle efficiency, and more particularly the engine arrangement efficiency, which has a direct impact on fuel consumption.

A significant amount of energy is included in the exhaust gases which have a high temperature.

Several systems have been designed to recover at least part of this energy. Some systems of the prior art provide a heat exchanger with the exhaust gases, designed to recover part of the exhaust gases heat and to use it, generally as work or electricity, for the operation of various elements of the vehicle.

Such known systems have several drawbacks. First of all, the heat exchanger arranged in the exhaust gas line requires space, brings weight and cost, in addition to the generally already existing exhaust gas after-treatment systems (such as particulate filters, selective catalytic reduction devices, etc.). Moreover, this heat exchanger can generate undesirable side-effects, such as increased backpressure in the exhaust line, which is prejudicial to the global engine efficiency and therefore reduces the benefits of the system.

It therefore appears that, from several standpoints, there is room for improvement in engine arrangements.

EP-1.249.585 discloses heat exchangers combined with a pre-catalytic and catalytic device.

### Summary of the invention

It is an object of the present invention to provide an improved engine arrangement, which can overcome the drawbacks encountered in conventional engine arrangements.

Another object of the present invention is to provide an energy recovery system for an engine arrangement comprising an internal combustion engine which better uses the energy contained in the exhaust gases.

According to the invention, such an energy recovery system comprises an exhaust line capable of collecting exhaust gases from an exhaust manifold of the engine, said exhaust line being equipped with a particulate filter. Said system further comprises a secondary line which is thermally linked with, but distinct from, the exhaust line, and which carries a fluid, in use. Said particulate filter has a filtering part in which exhaust gases can flow and a heat exchanging part in which said fluid can flow, the filtering part and heat exchanging part being arranged to transfer heat by conduction from the exhaust gases to said fluid, said secondary line being connected to energy recovery means which are capable of recovering energy from said heat.

The heat exchanging part has the shape of an annular cylinder arranged around the filtering part and comprises a cavity having an inlet and an outlet for the fluid carried by the secondary line. The cavity is formed between an inner wall with surrounds the central filtering part, and an outer wall.

In other words, according to the invention, a single part serves both as a particulate filter and as a heat exchanger. As a consequence, the system is less bulky than prior art systems in which there is provided a filter and a heat exchanger as two separate parts. Furthermore, the invention makes it possible to make the system lighter and to reduce costs. Moreover, since no separate heat exchanger is provided, there is no added back pressure, contrary to prior art systems.

The invention makes it possible to achieve two goals.

On the one hand, the invention improves energy recovery with respect to prior art systems, because the exhaust gas passes through filtering walls, which enhances thermal exchange. The energy is continuously recovered by the filtering means and then transferred to the heat exchanging means, i.e. to the energy recovery means via the heated fluid flowing in the secondary line.

On the other hand, the invention improves energy release and therefore protects the particulate filter. Indeed, because heat is transferred to the fluid flowing in the secondary line, the risk to harm the filtering means - or possible additional after-treatment devices located downstream from the particulate filter - due to too high temperature is significantly lowered. The heat released during an active regeneration of the particulate filter could be better managed and evacuated. Part of the energy produced during soot combustion by oxygen is transferred to the fluid of the secondary line.

According to an embodiment of the invention, the secondary line can be a closed loop forming a Rankine thermodynamic cycle, the energy recovery means including:
- displacement means for moving a liquid towards the particulate filter, in which said liquid is evaporated into a gas;
- a turbine located downstream from said particulate filter, capable of expanding the gas going out of said particulate filter;
- a condenser located downstream from said turbine, capable of condensing the expanded gas into a liquid which is carried towards said displacement means.

In concrete terms, the liquid can be water, which is evaporated into steam and moved thanks to a pump. Other organic fluids can also be used.

According to another embodiment of the invention, the secondary line can be an open loop forming a Brayton thermodynamic cycle, the energy recovery means including:
- a compressor located upstream from said particulate filter, capable of compressing a gas;
- a turbine located downstream from said particulate filter, capable of expanding the gas going out of said particulate filter.

In an advantageous way, the compressor can be driven by the turbine. The energy recovery means may also comprise heating means (such as an electric heater or a fuel injector) and/or an fuel burning heater located downstream from said particulate filter and upstream from the turbine. This optional additional device is designed to further heat the fluid flowing in said secondary line, thanks to an external energy, to be able to retrieve more energy from the system (thanks to the gas expansion in the turbine).

In yet another embodiment of the invention, the energy recovery means may comprise a thermoelectric generator and/or an endothermic reformer.

For example, the particulate filter can comprise a central filtering part and a heat exchanging area which surrounds at least partially said central filtering part and in which said fluid can flow.

The central filtering part can comprise a silicon carbide (SiC) and/or a metallic foam.

Preferably, the central filtering part and the heat exchanging area are housed in a canning, said canning being covered with an outer thermally insulating layer. Thus, the two functions of the particulate filter are integrated in a single part.

The invention also concerns an internal combustion engine equipped with a system as previously described.

These and other advantages will become apparent upon reading the following description in view of the drawing attached hereto representing, as non-limiting examples, embodiments of a vehicle according to the invention.

### Brief description of the drawing

The following detailed description of several embodiments of the invention is better understood when read in conjunction with the appended drawing being understood, however, that the invention is not limited to the specific embodiments disclosed. In the drawing,
Figure 1 is a schematic drawing of a particulate filter, showing the flow of exhaust gas and the flow of fluid in the secondary line;
Figure 2 is a schematic cross section of the particulate filter of Figure 1;
Figure 3 is a schematic perspective view of the central filtering part of the particulate filter of Figure 1;
Figure 4 is a schematic drawing of a first embodiment of an energy recovery system according to the invention;
Figure 5 is a schematic drawing of a second embodiment of an energy recovery system according to the invention.

### Detailed description of the invention

An internal combustion engine comprises an exhaust line 1 capable of collecting exhaust gas from an exhaust manifold of the engine (not shown) towards the atmosphere. The engine is for example a diesel engine. However the invention may concern any type of internal combustion engine needing a particle filter to meet ongoing or future legislation limits.

Exhaust line 1 is equipped with a particulate filter 2 which performs a mechanical filtering of particles contained in the exhaust gas, resulting from an incomplete combustion process in the engine.

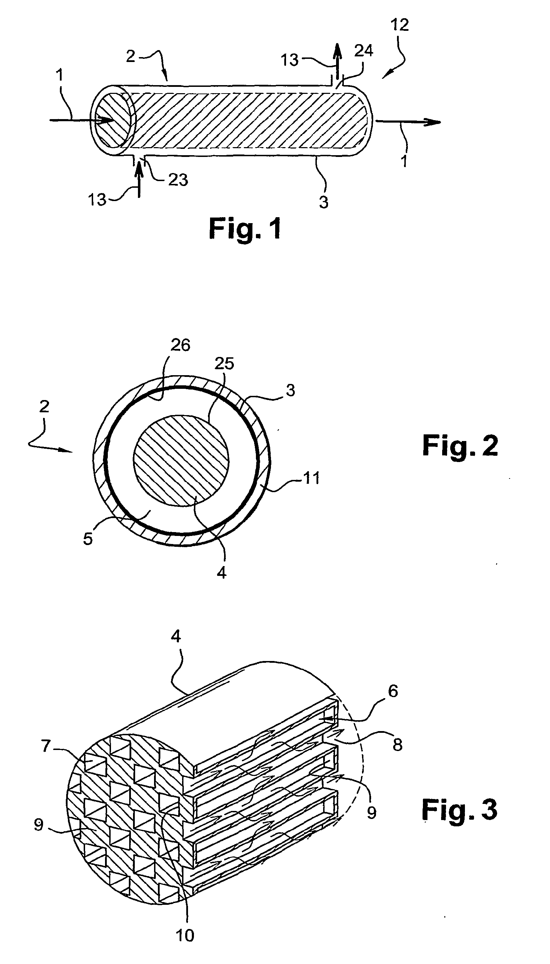

The particulate filter 2 is more particularly illustrated on Figures 2 and 3. Said particulate filter 2 comprises a canning 3 of generally cylindrical shape in which is housed a central filtering part 4 and a heat exchanging area 5 surrounding said central filtering part 4 (at least along the cylinder axis).

As illustrated in Figure 3, the central filtering part 4 comprise a network of longitudinally extending channels 6, each channel 6 having an inlet 7 and an outlet 8 for the exhaust gas. The inlets and outlets are alternately closed by a closing wall 9. The closing wall 9 as well as longitudinal walls 10 of the filtering part 4 are made of an appropriate filtering material which is able to retain the particles contained in the flowing exhaust gas (see arrows in Figure 3). Such a kind of particle filter is often called "wall flow", because the exhaust gases have to go through the walls separating one channel open on one side (upstream or downstream from the filter) from another channel open on the other side (respectively downstream or upstream from the filter) to go through the filter. This is opposed to "flow-through" kind of filter having channels which are each open at their both ends upstream and downstream of the filter.

The material forming the central filtering part 4 is preferably of high thermal conductivity and can comprise for example silicon carbide (SiC) and/or metallic foam. Preferably, the central filtering part 4 is unitary, composed of one piece of material. Therefore, the exhaust gases, which have to go through the walls of the filtering part, do indeed have the possibility to transfer a good proportion of the heat they contain to the said walls, i.e. to said filtering part.

The heat exchanging area 5 has for example the shape of an annular cylinder arranged around the filtering part 4, and comprises a cavity having an inlet 23 and an outlet 24 for the fluid carried by a secondary line 13 (as will be described later). The cavity can be formed between an inner wall 25 which surrounds the central filtering part 4, and an outer wall 26. Although the inner wall could be formed integral with the central filtering part 4, it can also be formed as a separate envelope surrounding said part. Preferably, such envelope should be in close contact with the central filtering part 4 so as to allow a good transfer of heat by conduction between the central filtering part 4 and the envelope. Of course, this envelope should be made of material having good thermal conductivity, such as a metal. Therefore, the heat which has been collected by the filtering part 4 is efficiently transferred to the inner envelope, which in turn can transfer the heat to the fluid flowing in the cavity. The envelope is preferably gas tight, so as to allow no transfer of fluid from the exhaust line 1 towards the cavity or reversely.

The canning 3 of the particulate filter 2 can advantageously form the outer wall of the cavity. It can be advantageously covered, on its external surface, by an outer layer 11 of a thermally insulating material.

The inner wall, the casing and the cavity should be constructed so as to provide a good heat transfer to the fluid, according to the techniques known to the skilled man in the art of heat exchangers.

Thus, a heat exchanger is integrated in the particulate filter canning 3.

The exhaust line 1 and the particulate filter 2 are part of an energy recovery system 12 according to the invention, which also comprise a secondary line 13 carrying a fluid. Said secondary line 13 is distinct from the exhaust line 1, but thermally linked with it, since the fluid flowing in the secondary line 13 enters the heat exchanging area 5 of the particulate filter 2, i.e. around filtering part 4, where it gets heat from the exhaust gas, and then goes out of the particulate filter 2.

An important aspect of the invention is that the secondary line 13 is connected to energy recovery means which are capable to make use of the energy from the heat transferred to the fluid flowing in the secondary line 13, said energy being used for various purposes in the vehicle.

Two particular embodiments of the invention will now be described.

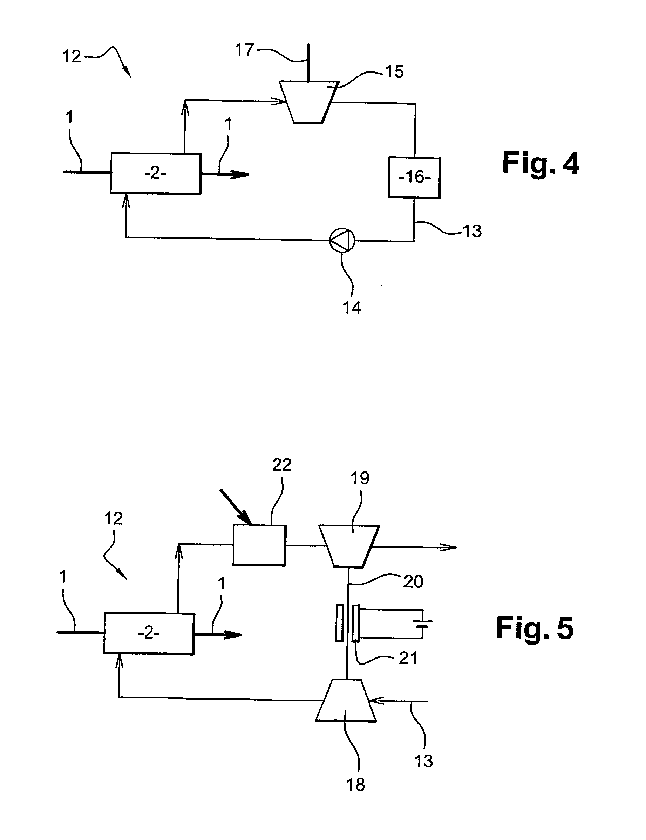

A first embodiment is illustrated in Figure 4.

In this embodiment, the secondary line is a closed loop forming a Rankine thermodynamic cycle.

Water (or another liquid, such as an organic fluid) is moved by means of a pump 14 in said secondary line 13, and enters the particulate filter 2, in which said water is evaporated into steam (or another corresponding gas), thanks to the heat received from the exhaust gas. Said particulate filter 2 therefore works as an evaporator. The steam going out of said particulate filter 2 is then expanded in a turbine 15 located downstream from said particulate filter 2. The expanded steam is then condensed into water in a condenser 16 located downstream from said turbine 15, said water being again directed towards the particulate filter 2 by means of the pump 14.

In this embodiment, the heat of exhaust gases is recovered into work on the turbine shaft 17.

A second embodiment is illustrated in Figure 5.

In this embodiment, the secondary line is an open loop forming a Brayton thermodynamic cycle. A gas, for example ambient air, is first compressed in a compressor 18 located upstream from said particulate filter 2, then passes through the heat exchanging area 5 of the particulate filter 2 acting as a heat exchanger, where said air is heated by the hot exhaust gases. Downstream from said particulate filter 2, heated air reaches a turbine 19 where it is expanded, thereby transforming the energy conveyed by the air into mechanical energy.

Turbine 19 is mechanically connected to compressor 18 by means of a shaft 20. The energy produced by the warm air expansion is recovered into mechanical energy on said shaft 20. Said energy is partially used to operate compressor 18.

The system may further comprise an alternator 21 designed to produce electricity from the mechanical energy generated by the turbine 19. Electricity can be used in a hybrid vehicle (i.e. a vehicle powered by an internal combustion engine and an electric motor) or in a conventional vehicle to charge a battery, to power auxiliaries, etc.

An optional heating device 22, such as a fuel burner or an electric heater, can be provided between particulate filter 2 and turbine 19 to bring additional heat to the gas entering the turbine 19.

In further embodiments, the heat which is collected by the fluid in the secondary line 13 can be transferred to other types of energy recovery means, such as a thermoelectric generator, where heat is transformed into electricity, or such as a chemical reformer, such as a fuel reformer to produce fuel for a fuel cell.

Therefore, the invention takes advantage of the thermal energy contained in the exhaust gases to transform it into mechanical, electrical or chemical energy which can be used for the operation of various elements of the vehicle.

The particulate filter also works as a heat exchanger, the filtering and heating functions being operated in a single part, which is a great advantage of the invention.

Another significant advantage of the invention is that it also makes it possible to evacuate energy from the particulate filter, thereby protecting it.

Of course, the invention is not restricted to the embodiment described above by way of non-limiting example, but on the contrary it encompasses all embodiments thereof, as defined by the appended claims.

## Claims

1. An energy recovery system for an internal combustion engine, said system (12) comprising an exhaust line (1) capable of collecting exhaust gases from an exhaust manifold of the engine, said exhaust line (1) being equipped with a particulate filter (2), wherein said system (12) further comprises a secondary line (13) which is thermally linked with, but distinct from, the exhaust line (1) and which carries a fluid, in use, said secondary line (13) being connected to energy recovery means which are capable of recovering energy from said heat, **characterized in that** said particulate filter has a filtering part (4) in which exhaust gases can flow and a heat exchanging part (5) in which said fluid can flow, the filtering part (4) and heat exchanging part (5) being arranged to transfer heat by conduction from the exhaust gases to said fluid, **in that** the heat exchanging part (5) has the shape of an annular cylinder arranged around the filtering part (4), and comprises a cavity having an inlet (23) and an outlet (24) for the fluid carried by the secondary line (13), and **in that** the cavity is formed between an inner wall (25) which surrounds the central filtering part (4), and an outer wall (26).

2. The system according to claim 1, **characterized in that** the secondary line (13) is a closed loop forming a Rankine thermodynamic cycle, the energy recovery means including:
- displacement means (14) for moving a liquid towards the particulate filter (2), in which said liquid is evaporated into a gas;
- a turbine (15) located downstream from said particulate filter (2), capable of expanding the gas going out of said particulate filter (2);
- a condenser (16) located downstream from said turbine (15), capable of condensing the expanded gas into a liquid which is carried towards said displacement means (14).

3. The system according to claim 1, **characterized in that** the secondary line (13) is an open loop forming a Brayton thermodynamic cycle, the energy recovery means including:
- a compressor (18) located upstream from said particulate filter (2), capable of compressing a gas;
- a turbine (19) located downstream from said particulate filter (2), capable of expanding the gas going out of said particulate filter (2).

4. The system according to any one of claims 1 to 3, **characterized in that** the energy recovery means comprise a thermoelectric generator and/or an endothermic reformer.

5. The system according to any preceding claim, **characterized in that** the central filtering part (4) comprises a silicon carbide (SiC) and/or a metallic foam.

6. The system according to any preceding claim, **characterized in that** the central filtering part (4) and the heat exchanging area (5) are housed in a canning (3), said canning (3) being covered with an outer thermally insulating layer (11).

7. The system according to any preceding claim, **characterized in that** the particle filter (2) is of the "wall flow" kind where exhaust gases have to go through the walls of the filtering part.

8. The system according to any preceding claim, **characterized in that** the central filtering part (4) is unitary, composed of one piece of material.

9. The system according to any preceding claim, **characterized in that** said inner wall (25) of the cavity is formed integral with the central filtering part (24).

10. The system according to any of claims 1 to 8, **characterized in that** said inner wall (25) of the cavity is formed as a separate envelope surrounding said part and being in close contact with the central filtering part (4).

11. The system according to claim 10, wherein the envelope is gas tight.

12. An internal combustion engine, **characterized in that** it comprises a system (12) according to any one of claims 1 to 11.

## Patentansprüche

1. Energierückgewinnungssystem für einen Verbrennungsmotor, wobei das System (12) eine Abgasleitung (1) aufweist, die in der Lage ist, Abgase von einem Abgassammler des Motors zu sammeln, wobei die Abgasleitung (1) mit einem Partikelfilter (2) ausgestattet ist, wobei das System (12) weiterhin eine sekundäre Leitung (13) aufweist, die mit der Abgasleitung (1) thermisch verbunden, aber von ihr verschieden ist, und die in Betrieb ein Fluid führt, wobei die sekundäre Leitung (13) mit Energierückgewinnungseinrichtungen verbunden ist, die in der Lage sind, Energie aus der Wärme zurückzugewinnen, **dadurch gekennzeichnet, dass** der Partikelfilter einen Filterteil (4), in dem Abgase strömen können, und einen Wärmeaustauschteil (5) aufweist, in dem das Fluid strömen kann, wobei der Filterteil (4) und der Wärmeaustauschteil (5) so angeordnet sind, dass sie von den Abgasen zu dem Fluid Wärme durch Leitung übertragen, dass der Wärmeaustauschteil (5) die Form eines ringförmigen Zylinders hat, der um den Filterteil (4) angeordnet ist, und einen Hohlraum aufweist, der einen Einlass (23) und einen Auslass (24) für das von der sekundären Leitung (13) geführte Fluid hat, und dass der Hohlraum zwischen einer den zentralen Filterteil (4) umgebenden Innenwand (25) und einer Außenwand (26) ausgebildet ist.

2. System nach Anspruch 1, **dadurch gekennzeichnet, dass** die sekundäre Leitung (13) ein geschlossener Kreislauf ist, der einen thermodynamischen Rankine-Kreisprozess bildet, wobei die Energierückgewinnungseinrichtungen
- eine Verdrängungseinrichtung (14) zum Bewegen einer Flüssigkeit zum Partikelfilter (2), in dem die Flüssigkeit zu einem Gas verdampft wird,
- eine Turbine (15), die stromabwärts von dem Partikelfilter (2) angeordnet und in der Lage ist, das aus dem Partikelfilter (2) austretende Gas zu expandieren, und
- einen Kondensator (16) umfassen, der stromabwärts von der Turbine (15) angeordnet und in der Lage ist, das expandierte Gas in eine Flüssigkeit zu kondensieren, die der Verdrängungseinrichtung (14) zugeführt wird.

3. System nach Anspruch 1, **dadurch gekennzeichnet, dass** die sekundäre Leitung (13) ein offener Kreislauf ist, der einen thermodynamischen Brayton-Kreisprozess bildet, wobei die Energierückgewinnungseinrichtungen
- einen Kompressor (18), der stromaufwärts von dem Partikelfilter (2) angeordnet und in der Lage ist, ein Gas zu komprimieren, und
- eine Turbine (19) umfassen, die stromabwärts von dem Partikelfilter (2) angeordnet und in der Lage ist, das aus dem Partikelfilter (2) austretende Gas zu expandieren.

4. System nach einem der Ansprüche 1 bis 3, **dadurch gekennzeichnet, dass** die Energierückgewinnungseinrichtungen einen thermoelektrischen Generator und/oder einen endothermen Reformer aufweisen.

5. System nach irgendeinem vorhergehenden Anspruch, **dadurch gekennzeichnet, dass** der zentrale Filterteil (4) ein Siliciumcarbid (SiC) und/oder einen Metallschaum aufweist.

6. System nach irgendeinem vorhergehenden Anspruch, **dadurch gekennzeichnet, dass** der zentrale Filterteil (4) und der Wärmeaustauschbereich (5) in einer Büchse (3) aufgenommen sind, wobei die Büchse (3) mit einer thermisch isolierenden Außenschicht (11) verkleidet ist.

7. System nach irgendeinem vorhergehenden Anspruch, **dadurch gekennzeichnet, dass** der Partikelfilter (2) zu der "Wand-Strömungs"-Bauweise gehört, bei der Abgase durch die Wände des Filterteils strömen müssen.

8. System nach irgendeinem vorhergehenden Anspruch, **dadurch gekennzeichnet, dass** der zentrale Filterteil (4) einheitlich aus einem Materialstück ausgebildet ist.

9. System nach irgendeinem vorhergehenden Anspruch, **dadurch gekennzeichnet, dass** die Innenwand (25) des Hohlraums einstückig mit dem zentralen Filterteil (24) ausgebildet ist.

10. System nach irgendeinem der Ansprüche 1 bis 8, **dadurch gekennzeichnet, dass** die Innenwand (25) des Hohlraums als getrennte Umhüllung ausgebildet ist, die diesen Teil umgibt und in engem Kontakt mit dem zentralen Filterteil (4) steht.

11. System nach Anspruch 10, bei welchem die Umhüllung gasdicht ist.

12. Verbrennungsmotor, **dadurch gekennzeichnet, dass** er ein System (12) nach irgendeinem der Ansprüche 1 bis 11 aufweist.

## Revendications

1. Système de récupération d'énergie pour un moteur à combustion interne, ledit système (12) comprenant une ligne d'échappement (1) capable de recueillir les gaz d'échappement depuis un collecteur d'échappement du moteur, ladite ligne d'échappement (1) étant munie d'un filtre à particules (2), ledit système (12) comprenant en outre une ligne secondaire (13) qui est reliée thermiquement à la ligne d'échappement (1), mais distinctement de celle-ci, et qui transporte un fluide pendant l'utilisation, ladite ligne secondaire (13) étant reliée à des moyens de récupération d'énergie qui sont capables de récupérer de l'énergie de ladite chaleur, **caractérisé en ce que** ledit filtre à particules présente une partie filtrante (4) dans laquelle les gaz d'échappement peuvent s'écouler et une partie d'échangeur de chaleur (5) dans laquelle ledit fluide peut s'écouler, la partie filtrante (4) et la partie d'échangeur de chaleur (5) étant agencées de manière à transférer la chaleur par conduction depuis les gaz d'échappement jusqu'audit fluide, **en ce que** la partie d'échangeur de chaleur (5) a la forme d'un cylindre annulaire agencé autour de la partie filtrante (4), et comprend une cavité ayant une entrée (23) et une sortie (24) pour le fluide transporté par la ligne secondaire (13), et **en ce que** la cavité est formée entre une paroi interne (25) qui entoure la partie filtrante centrale (4) et une paroi externe (26).

2. Système selon la revendication 1, **caractérisé en ce que** la ligne secondaire (13) est une boucle fermée formant un cycle thermodynamique de Rankine, les moyens de récupération d'énergie comportant :
- un moyen de déplacement (14) pour déplacer un liquide vers le filtre à particules (2), dans lequel ledit liquide est évaporé en un gaz ;
- une turbine (15) située en aval dudit filtre à particules (2), capable de dilater le gaz sortant dudit filtre à particules (2) ;
- un condenseur (16) situé en aval de ladite turbine (15), capable de condenser le gaz dilaté en un liquide qui est transporté vers ledit moyen de déplacement (14).

3. Système selon la revendication 1, **caractérisé en ce que** la ligne secondaire (13) est une boucle ouverte formant un cycle thermodynamique de Brayton, les moyens de récupération d'énergie comportant :
- un compresseur (18) situé en amont dudit filtre à particules (2), capable de comprimer un gaz ;
- une turbine (19) située en aval dudit filtre à particules (2), capable de dilater le gaz sortant dudit filtre à particules (2).

4. Système selon l'une quelconque des revendications 1 à 3, **caractérisé en ce que** les moyens de récupération d'énergie comprennent un générateur thermoélectrique et/ou un reformeur endothermique.

5. Système selon l'une quelconque des revendications précédentes, **caractérisé en ce que** la partie filtrante centrale (4) comprend un carbure de silicium (SiC) et/ou une mousse métallique.

6. Système selon l'une quelconque des revendications précédentes, **caractérisé en ce que** la partie filtrante centrale (4) et la partie d'échangeur de chaleur (5) sont logées dans un gainage (3), ledit gainage (3) étant recouvert par une couche extérieure thermiquement isolante (11).

7. Système selon l'une quelconque des revendications précédentes, **caractérisé en ce que** le filtre à particules (2) est du type « à flux par la paroi » dans lequel les gaz d'échappement doivent traverser les parois de la partie filtrante.

8. Système selon l'une quelconque des revendications précédentes, **caractérisé en ce que** la partie filtrante centrale (4) est unitaire, constituée d'une seule pièce de matériau.

9. Système selon l'une quelconque des revendications précédentes, **caractérisé en ce que** ladite paroi interne (25) de la cavité est formée intégralement avec la partie filtrante centrale (24).

10. Système selon l'une quelconque des revendications 1 à 8, **caractérisé en ce que** ladite paroi interne (25) de la cavité est formée en tant qu'enveloppe séparée entourant ladite partie et étant en contact étroit avec la partie filtrante centrale (4).

11. Système selon la revendication 10, dans lequel l'enveloppe est étanche aux gaz.

12. Moteur à combustion interne, **caractérisé en ce qu'**il comprend un système (12) selon l'une quelconque des revendications 1 à 11.
